# EUROPÄISCHE PATENTSCHRIFT

(11) **EP 4 742 296 B1**
(45) Veröffentlichungstag und Bekanntmachung des Hinweises auf die Patenterteilung: **18.11.2026**
(21) Anmeldenummer: 25189906.8
(22) Anmeldetag: 16.07.2025
(51) Int. Cl.: H01H 85/20, H02B 1/18, H01H 31/12

(54) **SICHERUNGSLASTTRENNSCHALTER FÜR SAMMELSCHIENEN UNTERSCHIEDLICHER DICKE**
FUSE LOAD BREAK SWITCH FOR BUSBARS OF DIFFERENT THICKNESSES
DISJONCTEUR-SECTIONNEUR À FUSIBLES POUR BARRES OMNIBUS D'ÉPAISSEURS DIFFÉRENTES

(30) Priorität: 08.11.2024 DE 102024132574
(43) Veröffentlichungstag der Anmeldung: 13.05.2026
(73) Patentinhaber: Klaus Bruchmann GmbH, 96110 Scheßlitz (DE)
(72) Erfinder: Bruchmann, Klaus, 96110 Scheßlitz (DE); Ness, Franz, 96110 Scheßlitz (DE)
(74) Vertreter: Appelt, Christian W.

(56) Entgegenhaltungen:
- EP-A1- 2 874 250
- DE-A1- 102012 013 828
- DE-A1- 3 409 211
- DE-A1- 3 811 569
- DE-U1- 9 104 212

## Beschreibung

Die vorliegende Erfindung bezieht sich auf einen Sicherungslasttrennschalter für Sammelschienen unterschiedlicher Dicken.

Bekannt sind Sicherungslasttrennschalter, die auf einem Sammelschienensystem befestigt werden und an unterschiedliche Dicken der Sammelschienen angepasst werden können. Üblicherweise werden Sammelschienen mit einer Dicke von 5 und 10 mm eingesetzt. Solche Sicherungslasttrennschalter lassen sich mit zusätzlichen (verlierbaren) oder im Sicherungslasttrennschalter integrierten (nicht verlierbaren) Bauteilen umbauen oder verstellen. Zunehmend werden jedoch Abdeckungen vor den Sammelschienen montiert, die auch während der Montage der Sicherungslasttrennschalter einen Berührungsschutz bieten. Um dennoch Sicherungslasttrennschalter montieren zu können, sind daher kompaktere Bauweisen erforderlich, die trotz dieses Berührungsschutzes installiert werden können.

DE 297 21 445 U1 beschreibt einen Geräteadapter, insbesondere für Lasttrennschalter, mit von einer Adapterplatte oder dergleichen abstehenden Kontaktfüßen und/oder Rastfüßen zum Aufschieben auf Sammelschienen, wobei die Kontakt- bzw. Rastfüße im wesentlichen L-förmig ausgebildet sind und einen Fußabschnitt festlegen, der etwa parallel und mit Abstand zur Adapterplatte verläuft, mit Ausgleichselementen, die auf oder in die Kontakt- bzw. Rastfüße aufsetzbar sind.

DE 198 36 383 C1 beschreibt eine Kontaktiereinrichtung mit Klemmbügeln zur klemmenden Aufnahme von Abschnitten von Sammelschienen, mit elektrischen Kontaktelementen, die zumindest bereichsweise über an der Unterseite des Adapters ausgebildeten Öffnungen durch die Sammelschienenabschnitte elektrisch kontaktierbar sind, bei der jeder Klemmbügel ein im wesentlichen L-förmiges Klemmteil und einen an diesem verstellbar angelenkten Schwenkbügel aufweist, wobei die Schenkellänge des verstellbaren Schwenkbügels gegenüber der Schenkellänge des Klemmteiles unterschiedlich dimensioniert ist.

DE 10 2012 013828 A1 beschreibt einen Sicherungslasttrennschalter gemäß dem Oberbegriff des Anspruchs 1.

Es ist eine Aufgabe der vorliegenden Erfindung, einen Sicherungslasttrennschalter bereitzustellen, um die Nutzerfreundlichkeit unter Berücksichtigung der gewünschten Anwendungen zu verbessern.

Diese Aufgabe wird durch einen Sicherungslasttrennschalter nach Anspruch 1 und gelöst. Die Ansprüche 2 bis 15 betreffen besonders vorteilhafte Realisierungen des Sicherungslasttrennschalters nach Anspruch 1.

Ein Aspekt der vorliegenden Erfindung bezieht sich auf einen Sicherungslasttrennschalter für Sammelschienen unterschiedlicher Dicken, insbesondere zur Befestigung an Sammelschienen unterschiedlicher Dicken und/oder Kontaktierung von Sammelschienen unterschiedlicher Dicken. Der Sicherungslasttrennschalter umfasst ein Gehäuse und ferner ein (ggf. erstes) Schiebeelement (und optional ein weiteres oder zweites Schiebeelement wie weiter unten beschrieben), ein Kontaktelement und ein Federelement. Der Sicherungslasttrennschalter kann auch mehrere Schiebeelemente (und optional mehrere weitere oder zweite und/oder ggf. dritte Schiebeelemente), mehrere Kontaktelemente und mehrere Federelemente umfassen; insbesondere jeweils ein Schiebeelement (und optional ein weiteres oder zweites Schiebeelement), ein Kontaktelement und ein Federelement für jede Sammelschiene eines Sammelschienensystems. Der Sicherungslasttrennschalter kann insbesondere dreiphasig sein und somit an drei Sammelschienen eines Sammelschienensystem montiert werden, die jeweils einer von drei Phasen entsprechen.

Das (ggf. erste) Schiebeelement ist relativ zu dem Gehäuse zwischen einer ersten Position und einer zweiten Position hin und her bewegbar angeordnet und in der ersten Position und in der zweiten Position jeweils verrastbar. Das (ggf. erste) Schiebeelement kann derart an dem Gehäuse angebracht oder befestigt sein, dass es zwischen der ersten Position und der zweiten Position hin und her bewegbar angeordnet ist. Insbesondere kann das (ggf. erste) Schiebeelement relativ zu dem Gehäuse linear oder im Wesentlichen linear zwischen der ersten Position und der zweiten Position bewegbar angeordnet sein, insbesondere entlang einer Z-Richtung. Die erste Position kann relativ zu der zweiten Position in der negativen Z-Richtung liegen. Die X-Richtung, Y-Richtung und Z-Richtung stehen jeweils senkrecht aufeinander.

Das Kontaktelement ist relativ zu dem Gehäuse bewegbar angeordnet. Insbesondere kann das Kontaktelement relativ zu dem Gehäuse linear oder im Wesentlichen linear bewegbar angeordnet sein, insbesondere entlang der Z-Richtung. Das Kontaktelement kann relativ zu dem (ggf. ersten) Schiebeelement in der positiven Z-Richtung angeordnet sein. Wenn das Schiebeelement sich in der ersten Position befindet, kann ein Abstand, insbesondere in der Z-Richtung, zwischen dem Schiebeelement und dem Kontaktelement größer sein als wenn das Schiebeelement sich in der zweiten Position befindet. Durch die Bewegung des Kontaktelements relativ zu dem Gehäuse kann der Abstand, insbesondere in der Z-Richtung, zwischen dem Kontaktelement und dem Schiebeelement (das in der ersten oder zweiten Position verrastet ist) verändert werden. Das Kontaktelement kann sich insbesondere auf das Schiebeelement zu und von dem Schiebeelement weg bewegen.

Das (ggf. erste) Schiebeelement und das Kontaktelement sind so ausgebildet, dass sie einen ersten Aufnahmebereich für eine erste Sammelschiene einer ersten Dicke definieren, wenn das Schiebeelement in der ersten Position angeordnet ist, und einen zweiten Aufnahmebereich für eine zweite Sammelschiene einer zweiten Dicke, die kleiner als die erste Dicke ist, definieren, wenn das Schiebeelement in der zweiten Position angeordnet ist. Somit kann die erste Sammelschiene zwischen dem Kontaktelement und dem Schiebeelement, das in der ersten Position angeordnet ist, angeordnet bzw. eingesetzt werden, und die zweite Sammelschiene kann zwischen dem Kontaktelement und dem Schiebeelement, das in der zweiten Position angeordnet ist, angeordnet bzw. eingesetzt werden. Die Ausdehnung des ersten Aufnahmebereichs in der Z-Richtung (Höhe des ersten Aufnahmebereichs) kann gleich der ersten Dicke sein und die Ausdehnung des zweiten Aufnahmebereichs in der Z-Richtung (Höhe des zweiten Aufnahmebereichs) kann gleich der zweiten Dicke sein. Ferner kann ein Abstand zwischen der ersten und der zweiten Position des Schiebeelements gleich der Differenz zwischen der ersten und der zweiten Dicke sein.

Das Federelement oder die Feder ist so ausgebildet, dass es bzw. sie das Kontaktelement in Richtung des Schiebeelements vorspannt, um eine in den ersten Aufnahmebereich eingesetzte oder einsetzbare erste Sammelschiene zu kontaktieren und um eine in den zweiten Aufnahmebereich eingesetzte oder einsetzbare zweite Sammelschiene zu kontaktieren. Das Federelement kann insbesondere eine Federkraft auf das Kontaktelement ausüben, die in Richtung des Schiebeelements weist, insbesondere in die negative Z-Richtung. Wenn die erste Sammelschiene in den ersten Aufnahmebereich zwischen dem Schiebeelement, das sich in der ersten Position befindet, und dem Kontaktelement eingesetzt ist, kann das Kontaktelement durch die Federkraft auf die erste Sammelschiene zu vorgespannt werden; die Federkraft kann durch das Kontaktelement auf die erste Schiene übertragen werden, so dass die erste Schiene zwischen dem Kontaktelement und dem Schiebeelement in der ersten Position eingeklemmt wird. Wenn die zweite Sammelschiene in den zweiten Aufnahmebereich zwischen dem Schiebeelement, das sich in der zweiten Position befindet, und dem Kontaktelement eingesetzt ist, kann das Kontaktelement durch die Federkraft auf die zweite Sammelschiene zu vorgespannt werden; die Federkraft kann durch das Kontaktelement auf die zweite Schiene übertragen werden, so dass die zweite Schiene zwischen dem Kontaktelement und dem Schiebeelement in der zweiten Position eingeklemmt wird. Die Größe der Federkraft bzw. die Klemmkraft, die auf die erste Schiene wirkt, die zwischen dem Kontaktelement und dem Schiebeelement in der ersten Position eingeklemmt ist, kann gleich der Größe der Federkraft bzw. der Klemmkraft sein, die auf die zweite Schiene wirkt, die zwischen dem Kontaktelement und dem Schiebeelement in der zweiten Position eingeklemmt ist. Die erste bzw. zweite Sammelschiene kann darüber hinaus zwischen dem Schiebeelement in der ersten bzw. zweiten Position und einem weiteren Teil des Gehäuses aufgenommen und/oder befestigt werden, um die Sammelschiene in dem ersten bzw. zweiten Aufnahmebereich zu halten und/oder zu befestigen.

Der erfindungsgemäße Sicherungslasttrennschalter hat den Vorteil, dass Sammelschienen unterschiedlicher Dicken, insbesondere Sammelschienen der ersten bzw. zweiten Dicke, in dem ersten bzw. zweiten Aufnahmebereich zwischen dem Schiebeelement, das in der ersten bzw. zweiten Position angeordnet ist, und dem Kontaktelement aufgenommen und durch das Kontaktelement kontaktiert werden können. Durch die Anordnung und Verrastung des Schiebeelements in der ersten bzw. zweiten Position kann insbesondere der Abstand zwischen Schiebeelement und Kontaktelement an die jeweilige Dicke der ersten bzw. zweiten Sammelschiene angepasst werden, so dass das Kontaktelement jeweils mit der gleichen Federkraft in Richtung auf die erste bzw. zweite Sammelschiene zu vorgespannt werden kann. Somit kann sowohl die erste Sammelschiene als auch die zweite Sammelschiene sicher und verlässlich kontaktiert werden.

Darüber hinaus ermöglicht die Verrastung des Schiebeelements in der ersten bzw. zweiten Position sowie die federbelastete Bewegung des Kontaktelements eine einfache, schnelle und sichere Montage an den Sammelschienen bzw. Kontaktierung der Sammelschienen. Somit wird die Nutzerfreundlichkeit erhöht.

Das Schiebeelement kann insbesondere werkzeuglos verstellt und seine Position somit an die Dicke der jeweiligen Sammelschiene bzw. des jeweiligen Sammelschienensystems angepasst werden. Zudem kann das Schiebeelement an dem Gehäuse befestigt bzw. verbaut und gesichert sein, so dass verlierbare Bauteile des Sicherungslasttrennschalters vermieden werden. Darüber hinaus ermöglicht der erfindungsgemäße Sicherungslasttrennschalter eine kompakte Bauweise, bei der die Sammelschienen durch eine geschlitzte Abdeckung der Sammelschienen, die als Berührungsschutz dient, erreicht werden können. Ein solcher Berührungsschutz kann insbesondere der Norm DIN VDE 0603-3-2 (Abschnitt 10) entsprechen.

In einer bevorzugten Ausführungsform umfasst das Gehäuse ein (ggf. erstes) Führungselement zum Führen des (ggf. ersten) Schiebeelements entlang einer Führungsrichtung, insbesondere der Z-Richtung, zwischen der ersten und der zweiten Position. Das Führungselement kann insbesondere als ein Fußteil oder Hakenteil des Gehäuses ausgebildet sein. Das (ggf. erste) Führungselement und das (ggf. erste) Schiebeelement können eine Feder-Nut-Verbindung zum Führen des Schiebeelements relativ zu dem Führungselement entlang der Führungsrichtung aufweisen. Insbesondere kann das Schiebeelement eine Feder oder einen Vorsprung aufweisen, die bzw. der in eine Nut oder Aussparung des (ggf. ersten) Führungselements eingreift, oder zwei an gegenüberliegenden Seiten angeordnete Federn oder Vorsprünge, die jeweils in eine von zwei parallelen Nuten oder Aussparungen des Führungselements eingreifen. Die Rollen von Federn und Nuten können auch vertauscht werden (so dass das Schiebeelement die Nut oder Nuten aufweist und das Führungselement die Feder oder Federn). Die Federn und Nuten können sich jeweils entlang der Z-Richtung erstrecken.

Dies ermöglicht eine einfache, sichere und schnelle Bewegung des Schiebeelements zwischen der ersten und zweiten Position, insbesondere eine präzise Anordnung des Schiebeelements in der ersten bzw. zweiten Position. Somit wird die Nutzerfreundlichkeit erhöht und die Stabilität des Sicherungslasttrennschalters verbessert. Durch die Anbringung bzw. Befestigung des Schiebeelements an dem Gehäuse, insbesondere durch die Feder-Nut-Verbindung, werden zudem verlierbare Komponenten vermieden, so dass die Nutzerfreundlichkeit erhöht wird.

In einer bevorzugten Ausführungsform weist das Führungselement eine erste Rastkante und eine zweite Rastkante auf. Die erste Rastkante und die zweite Rastkante können jeweils senkrecht oder im Wesentlichen senkrecht zu der Führungsrichtung verlaufen, insbesondere parallel oder im Wesentlichen parallel zu der X-Richtung. Die erste Rastkante und die zweite Rastkante können parallel oder im Wesentlichen parallel zueinander verlaufen und in der Führungsrichtung voneinander beabstandet sein. Das Schiebeelement umfasst ferner eine Rastnase oder einen Rastvorsprung, die bzw. der zum Verrasten an der ersten Rastkante konfiguriert ist, um das Schiebeelement in der ersten Position zu verrasten, und die bzw. der zum Verrasten an der zweiten Rastkante konfiguriert ist, um das Schiebeelement in der zweiten Position zu verrasten. Insbesondere kann die Rastnase in der negativen Z-Richtung durch eine Anschlagsfläche oder Kontaktfläche oder Stützfläche begrenzt sein, die senkrecht oder im Wesentlichen senkrecht zu der Z-Richtung verläuft. Die Anschlagsfläche kann an der ersten bzw. zweiten Rastkante anliegen, wenn die Rastnase in die erste bzw. zweite Aussparung eingerastet ist. Durch den Kontakt von Anschlagsfläche und erster bzw. Rastkante wird somit eine Bewegung der Rastnase von der ersten bzw. zweiten Aussparung in die negative Z-Richtung verhindert und dadurch das Schiebeelement in der ersten bzw. zweiten Position verrastet.

Dies ermöglicht eine einfache und sichere Verrastung des Schiebeelements in der ersten bzw. zweiten Position. Ferner werden hierdurch zusätzliche Bauteile zum Verrasten vermieden, und der Sicherungslasttrennschalter kann somit einfach und kostengünstig hergestellt werden.

In einer bevorzugten Ausführungsform weist das Führungselement eine erste Aussparung oder Vertiefung aufweist, die durch die erste Rastkante begrenzt wird, so dass, wenn die Rastnase an der ersten Rastkante verrastet, die Rastnase in die erste Aussparung eingreift, vorzugsweise formschlüssig eingreift. Darüber hinaus kann das Führungselement eine zweite Aussparung oder Vertiefung aufweisen, die durch die zweite Rastkante begrenzt wird, so dass, wenn die Rastnase an der zweiten Rastkante verrastet, die Rastnase in die zweite Aussparung eingreift, vorzugsweise formschlüssig eingreift.

Dies gewährleistet eine sichere und stabile Rastverbindung, so dass das Schiebeelement sicher in der ersten Position und/oder zweiten Position verrastet werden kann.

In einer bevorzugten Ausführungsform sind die Rastnase und die erste Aussparung so ausgebildet, dass, wenn das Schiebeelement in der ersten Position verrastet ist, die Rastnase durch eine (hinreichend große) äußere Kraft, die in Richtung von der ersten Position zu der zweiten Position, insbesondere in der positiven Z-Richtung, auf das Schiebeelement wirkt, aus der ersten Aussparung herausdrückt werden kann, um die Verrastung des Schiebeelements (20) in der ersten Position zu lösen und insbesondere anschließend das Schiebeelement von der ersten Position zu der zweiten Position zu bewegen. Insbesondere kann die Rastnase in der positiven Z-Richtung durch eine Abschrägung bzw. abgeschrägte Fläche begrenzt sein, wobei die Abschrägung mit der Z-Richtung einen spitzen Winkel, vorzugsweise einen Winkel kleiner oder gleich 45° und/oder größer oder gleich 20°, besonders bevorzugt einen Winkel von 20°, 25°, 30°, 35°, 40° oder 45°, einschließt. Die erste Aussparung kann eine entsprechende Abschrägung aufweisen, an der die Abschrägung der Rastnase anliegt, wenn die Rastnase in die erste Aussparung einrastet. Die Abschrägung reduziert die Kraft, die erforderlich ist, um die Rastnase aus der ersten Aussparung zu drücken. Anschließend kann das Schiebeelement von der ersten zu der zweiten Position bewegt werden, so dass die Rastnase in die zweite Aussparung einrastet.

Dies ermöglicht eine besonders einfache und schnelle Bewegung des Schiebeelements von der ersten zu der zweiten Position, wobei insbesondere kein Werkzeug zum Lösen der Verrastung erforderlich ist. Somit wird die Nutzerfreundlichkeit erhöht.

In einer bevorzugten Ausführungsform ist der Sicherungslasttrennschalter so konfiguriert, dass, wenn das Schiebeelement in der zweiten Position verrastet ist, die Rastnase durch eine (hinreichend große) erste äußere Kraft, die senkrecht oder im Wesentlichen senkrecht zu der Führungsrichtung und senkrecht oder im Wesentlichen senkrecht zu der zweiten Rastkante, insbesondere parallel zu der Y-Richtung, auf einen Abschnitt des Schiebeelements wirkt, der in der Führungsrichtung (insbesondere in der positiven Z-Richtung) gegenüber dem Führungselement vorsteht, in Richtung der ersten äußeren Kraft über die zweite Rastkante hinaus gedrückt bzw. gegen die zweite Rastkante versetzt werden kann und anschließend das Schiebeelement durch eine zweite äußere Kraft, die in Richtung von der zweiten Position zu der ersten Position auf das Schiebeelement wirkt, aus der Verrastung in der zweiten Position gelöst und in Richtung der ersten Position bewegt werden kann. Insbesondere kann, wenn das Schiebeelement in der zweiten Position verrastet ist, das Schiebeelement an dem Führungselement anliegen, während durch die äußere Kraft das (insbesondere plattenförmige) Schiebeelement elastisch verformt werden und dadurch zumindest teilweise von dem Führungselement entfernt werden kann, insbesondere so, dass die Rastnase aus der zweiten Vertiefung heraus bewegt wird. Wenn das Schiebeelement anschließend in Richtung der ersten Position (in die negative Z-Richtung) bewegt wird und keine äußere Kraft mehr in der Y-Richtung wirkt, kann die Rastnase in die erste Aussparung einrasten.

Dies ermöglicht eine besonders einfache und schnelle Bewegung des Schiebeelements von der zweiten zu der ersten Position, wobei insbesondere kein Werkzeug zum Lösen der Verrastung erforderlich ist. Somit wird die Nutzerfreundlichkeit erhöht.

In einer bevorzugten Ausführungsform ist das Schiebeelement plattenförmig ausgebildet. Insbesondere kann sich das Schiebeelement zumindest teilweise parallel zu der XZ-Ebene (d.h. parallel zu der X-Richtung und zu der Z-Richtung) erstrecken. In der XZ-Ebene kann das plattenförmige Schiebeelement insbesondere eine L-Form oder Hakenform aufweisen.

Dies hat den Vorteil, dass das Schiebeelement leicht und kostengünstig hergestellt werden kann. Ferner ermöglicht dies eine kompakte Bauweise des Sicherungslasttrennschalters, bei der das plattenförmige Schiebeelement die (erste bzw. zweite) Sammelschiene durch eine geschlitzte Abdeckung der Sammelschiene, die insbesondere als Berührungsschutz dient, erreichen kann.

Weiterhin können, wenn das Schiebeelement in der ersten Position angeordnet ist, das Schiebeelement und das Führungelement übereinanderliegend oder deckungsgleich angeordnet sein. Insbesondere kann auch das Führungselement plattenförmig oder im Wesentlichen plattenförmig ausgebildet sein und kann eine gleiche oder im Wesentlichen gleiche Form wie das Schiebeelement aufweisen, insbesondere eine L-Form oder Hakenform wie oben beschrieben. Wenn das Schiebeelement in der zweiten Position angeordnet ist, können dagegen das Schiebeelement und das Führungselement in der Führungsrichtung gegeneinander versetzt angeordnet sein, insbesondere so, dass ein Abschnitt des Schiebeelement gegenüber dem Führungselement in der positiven Z-Richtung vorsteht.

Dadurch wird eine besonders kompakte und platzsparende Bauweise erreicht, bei der die Sammelschienen durch eine geschlitzte Abdeckung der Sammelschienen, die als Berührungsschutz dient, erreicht werden können.

In einer bevorzugten Ausführungsform weist das Schiebeelement eine Oberfläche mit ein oder mehrere Rillen und/oder Nuten auf, die vorzugsweise senkrecht oder im Wesentlichen senkrecht zu der Führungsrichtung verlaufen.

Dadurch kann eine Reibungskraft zwischen dem Schiebeelement und einem Finger des Nutzers erhöht werden, so dass der Nutzer das Schiebeelement leichter zwischen der ersten und der zweiten Position verschieben kann. Somit wird die Nutzerfreundlichkeit erhöht.

In einer bevorzugten Ausführungsform ist ein Abstand zwischen der ersten und der zweiten Position des Schiebeelements größer als ein Hub oder Federweg des Federelements. Der Hub bezeichnet dabei einen Abstand, den das Federelement beim Montieren des Sicherungslasttrennschalters auf dem Sammelschienensystem zurücklegt, insbesondere beim Aufnehmen der ersten Sammelschiene in den ersten Aufnahmebereich bzw. beim Aufnehmen der zweiten Sammelschiene in den zweiten Aufnahmebereich. Der Abstand zwischen der ersten und der zweiten Position des Schiebeelements kann gleich der Differenz zwischen der ersten und der zweiten Dicke sein. Besonders bevorzugt beträgt der Abstand zwischen der ersten und der zweiten Position des Schiebeelements mindestens das Doppelte, mindestens das Dreifache oder mindestens das Fünffache des Hubs des Federelements.

Durch die Verwendung des Federelements mit kleinerem Hub wird eine kompakte Bauweise und kostengünstige Herstellung des Sicherungslasttrennschalters ermöglicht. Durch die Anordnung des Schiebeelements in der ersten bzw. zweiten Position kann dennoch der Abstand zwischen Schiebeelement und Kontaktelement an die jeweilige Dicke der ersten bzw. zweiten Sammelschiene angepasst werden, insbesondere so, dass das Kontaktelement jeweils mit der gleichen Federkraft in Richtung auf die erste bzw. zweite Sammelschiene zu vorgespannt werden kann. Somit kann sowohl die erste Sammelschiene als auch die zweite Sammelschiene sicher und verlässlich kontaktiert werden.

In einer bevorzugten Ausführungsform umfasst der Sicherungslasttrennschalter ein weiteres Schiebeelement, das parallel zu dem Schiebeelement angeordnet ist und von dem Schiebeelement in einer Erstreckungsrichtung der Sammelschienen, insbesondere in der Y-Richtung, beabstandet ist. Das Schiebeelement und das weitere (oder zweite) Schiebeelement können identisch (bzw. spiegelbildlich) ausgebildet und angeordnet sein. Insbesondere können der erste bzw. zweite Aufnahmebereich durch das Kontaktelement, das Schiebeelement und das weitere (oder zweite) Schiebeelement definiert werden, wenn sich das Schiebeelement und das weitere Schiebeelement jeweils in ihrer ersten bzw. zweiten Positionen befinden.

Dies ermöglicht eine stabile und sichere Aufnahme der Sammelschienen in die jeweiligen Aufnahmebereiche und deren sichere Kontaktierung. Die Verwendung von zwei insbesondere schmaleren parallelen Schiebeelementen statt einem breiteren Schiebeelement ermöglicht zudem eine kompaktere Bauweise, bei der die Sammelschienen durch eine geschlitzte Abdeckung, die als Berührungsschutz dient, erreicht werden können.

In einer bevorzugten Ausführungsform umfasst das Gehäuse ein weiteres (oder zweites) Führungselement zum Führen des weiteren Schiebeelements entlang der Führungsrichtung, wobei das weitere (zweite) Führungselement parallel zu dem (ersten) Führungselement angeordnet ist und von dem Führungselement in der Erstreckungsrichtung der Sammelschienen, insbesondere in der Y-Richtung, beabstandet ist. Das Führungselement und das weitere Führungselement können identisch (bzw. spiegelbildlich) ausgebildet und angeordnet sein.

Dies ermöglicht eine sichere und präzise Führung der beiden Schiebeelemente zwischen ihren jeweiligen ersten und zweiten Positionen. Die Verwendung von zwei insbesondere schmaleren parallelen Führungselementen statt einem breiteren Führungselement ermöglicht zudem eine kompaktere Bauweise, bei der die Sammelschienen durch eine geschlitzte Abdeckung, die als Berührungsschutz dient, erreicht werden können.

In einer bevorzugten Ausführungsform sind das Schiebeelement und das weitere Schiebeelement an gegenüberliegenden Seitenabschnitten oder Gehäusehälften des Gehäuses angeordnet. Die Seitenabschnitte können symmetrisch, im Wesentlichen symmetrisch oder zumindest teilweise symmetrisch ausgebildet und angeordnet sein. Die Seitenabschnitte können insbesondere separat ausgebildet und trennbar verbunden sein, um das Gehäuse zu bilden. Die beiden Seitenabschnitte des Gehäuses können jeweils eines der beiden Führungselemente umfassen, und die beiden Schiebeelemente können jeweils an einem der beiden Führungselemente angebracht oder befestigt sein. Die beiden Schiebeelemente können insbesondere an gegenüberliegenden Außenflächen des Gehäuses bzw. der Führungselemente angeordnet sein. Die Rastnasen der beiden Schiebeelemente können in diesem Fall jeweils nach innen weisen, d. h. an gegenüberliegenden Flächen der beiden Schiebeelemente angeordnet sein. In diesem Fall weisen die Kräfte zum Lösen der Verrastungen der Schiebeelemente aus ihren zweiten Positionen jeweils nach außen.

Dies ermöglicht eine kompakte und stabile Bauweise des Sicherungslasttrennschalters und eine einfache und nutzerfreundliche Verstellung der Schiebeelemente.

In einer bevorzugten Ausführungsform ist das Kontaktelement plattenförmig ausgebildet. Besonders bevorzugt umfasst das Kontaktelement einen ersten Kontaktabschnitt und einen zweiten Kontaktabschnitt, die parallel zueinander angeordnet sind und in der Erstreckungsrichtung der Sammelschienen, insbesondere in der Y-Richtung, voneinander beabstandet sind, sowie einen Verbindungsabschnitt zum Verbinden des ersten Kontaktabschnitts mit dem zweiten Kontaktabschnitt. Der erste und der zweite Kontaktabschnitte können jeweils parallel zu der XZ-Ebene angeordnet sein, und der Verbindungsabschnitt kann parallel zu der XY-Ebene angeordnet sein. Ferner kann der erste Kontaktabschnitt dem Schiebeelement in der Z-Richtung gegenüberliegen und der zweite Kontaktabschnitt dem weiteren Schiebeelement in der Z-Richtung gegenüberliegen.

Somit kann das Kontaktelement einfach und kostengünstig hergestellt werden. Ferner wird somit eine besonders sichere Kontaktierung der Sammelschienen durch den ersten und zweiten Kontaktabschnitt erreicht. Ferner ermöglicht dies eine kompakte Bauweise des Sicherungslasttrennschalters, bei der die Sammelschienen durch eine geschlitzte Abdeckung, die beispielsweise als Berührungsschutz dient, erreicht werden können. Die U-Form des Kontaktelements ist für den Einsatz beim Durchstechen auf ein berührgeschützes Sammelschienenboard besonders vorteilhaft. Somit wird die Nutzerfreundlichkeit erhöht.

Diese und weitere Merkmale und Vorteile der Erfindung werden anhand der beigefügten Zeichnungen, die besonders vorteilhafte Ausführungsformen zeigen, deutlich. Es zeigen:
- Fig. 1A: einen Sicherungslasttrennschalter gemäß einer Ausführungsform der vorliegenden Erfindung, der auf einem Sammelschienensystem montiert ist;
- Fig. 1B: den Sicherungslasttrennschalter, bei dem eine Gehäusehälfte entfernt wurde;
- Fig. 2: den Sicherungslasttrennschalter aus einer anderen Perspektive;
- Fig. 3: den Sicherungslasttrennschalter mit einem Schiebeelement, das sich relativ zu dem Gehäuse in einer ersten Position befindet;
- Fig. 4: eine Schnittansicht des Sicherungslasttrennschalters, der eine Sammelschiene einer ersten Dicke kontaktiert;
- Fig. 5: eine Schnittansicht des Sicherungslasttrennschalters, der eine Sammelschiene einer zweiten Dicke kontaktiert, die kleiner als die erste Dicke ist;
- Fig. 6: den Sicherungslasttrennschalter, bei dem das Schiebeelement in der ersten Position verrastet ist, mit einer Darstellung der aufzubringenden Kraft zur Bewegung des Schiebeelements von der ersten Position zu der zweiten Position, sowie eine Detailansicht einer Rastnase des Schiebeelements; und
- Fig. 7: den Sicherungslasttrennschalter, bei dem das Schiebeelement in der zweiten Position verrastet ist, mit einer Darstellung der aufzubringenden Kraft zur Bewegung des Schiebeelements von der zweiten Position zu der ersten Position, sowie eine Detailansicht der Rastnase des Schiebeelements.

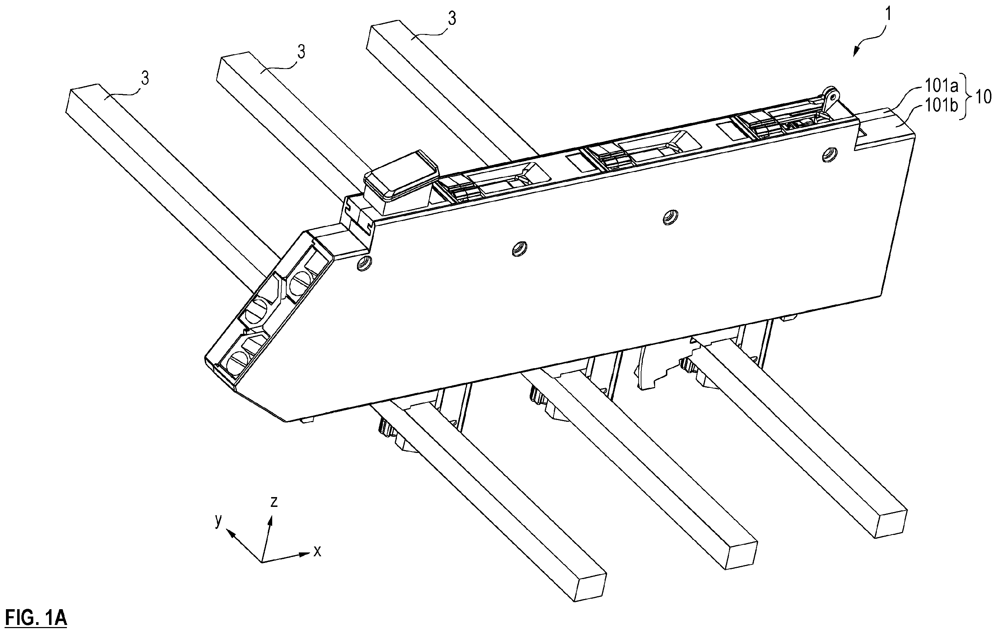

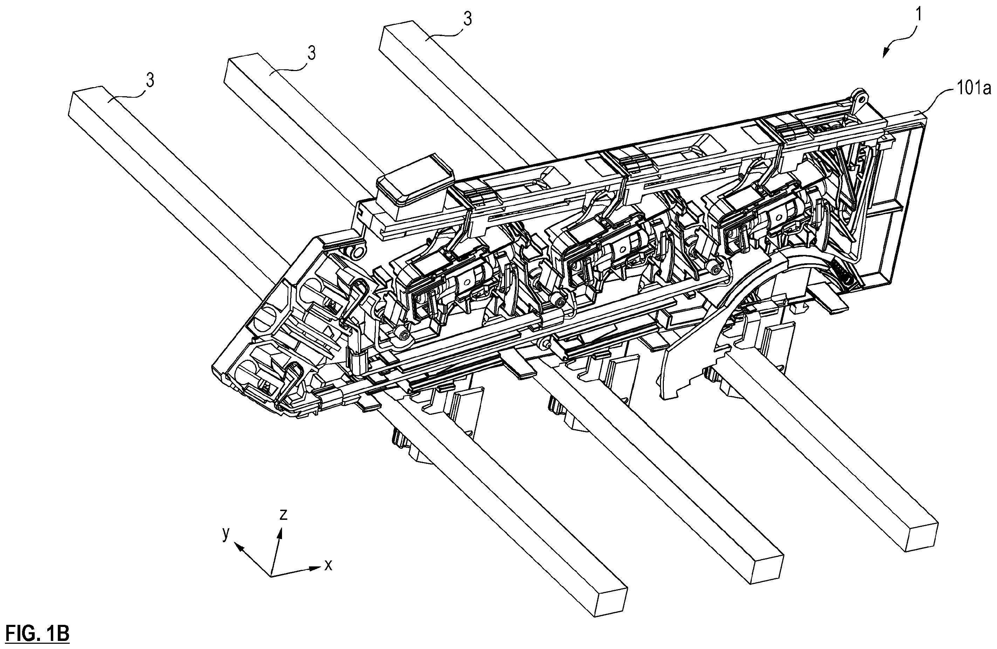

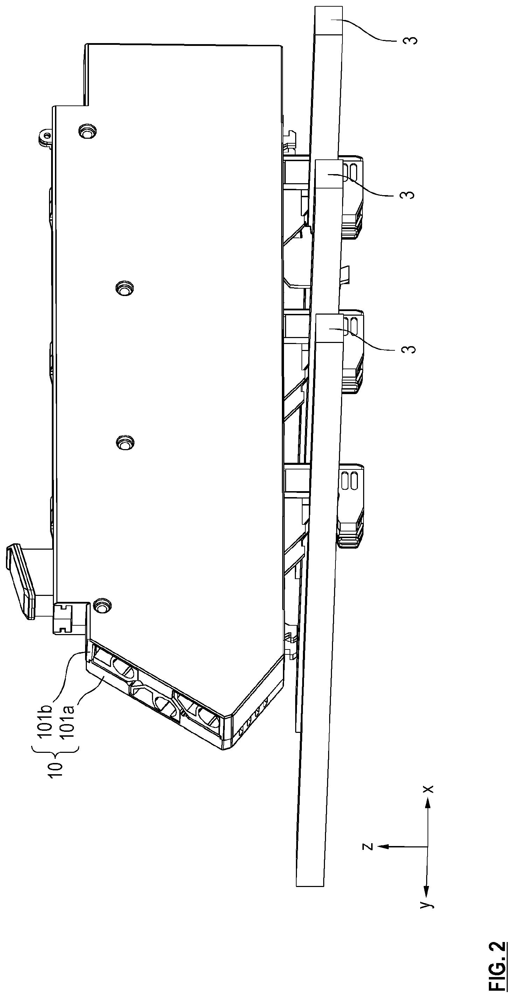

Fig. 1A zeigt einen Sicherungslasttrennschalter 1 gemäß einer Ausführungsform der vorliegenden Erfindung, der auf einem Sammelschienensystem montiert ist. Fig. 1B zeigt den Sicherungslasttrennschalter 1 aus Fig. 1A, bei dem eine Gehäusehälfte entfernt wurde Fig. 2 zeigt den Sicherungslasttrennschalter 1 aus einer anderen Perspektive. Fig. 1 und 2 zeigen insbesondere einen Sicherungslasttrennschalter 1 für ein dreiphasiges Sammelschienensystem mit Abstand von 60 mm. Der Sicherungslasttrennschalter 1 ist somit zur Montage an und Kontaktierung von drei Sammelschienen 3 ausgelegt. Die Sammelschienen 3 erstrecken sich entlang einer Erstreckungsrichtung (Y-Richtung). Der Sicherungslasttrennschalter 1 umfasst ein Gehäuse 10 mit zwei gegenüberliegenden Seitenabschnitten (Gehäusehälften) 101a, 101b.

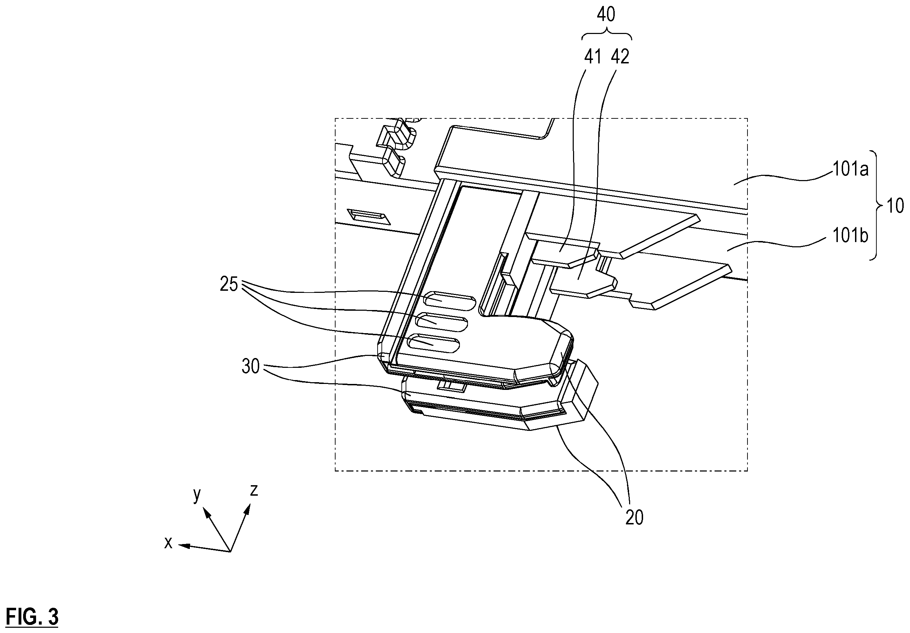

Der Sicherungslasttrennschalter 1 kann an die jeweilige Dicke der Sammelschienen 3 angepasst werden. Er lässt sich beispielsweise für Sammelschienen 3 mit einer Dicke von 5 mm (zweite Dicke) oder 10 mm (erste Dicke) einstellen. Dies geschieht durch ein Schiebeelement (einen Schieber) 20 an einer Unterseite des Sicherungslasttrennschalters 1, der an einer definierten ersten bzw. zweiten Position in der jeweiligen Gehäusehälfte 101a, 101b, in welcher er geführt wird, einrastet (siehe Fig. 3). Die Anpassung der Schiebeelemente 20 für das entsprechende Sammelschienensystem erfolgt vor der Montage an dem Sammelschienensystem.

Fig. 3 zeigt den Sicherungslasttrennschalter 1 aus Fig. 1 und 2 mit dem Schiebeelement 20, das sich relativ zu dem Gehäuse 10 in der ersten Position befindet. Das Schiebeelement 20 wird durch ein Führungselement 30 des Gehäuses 10 zwischen der ersten und der zweiten Position entlang einer Führungsrichtung (Z-Richtung) geführt. Das Schiebeelement 20 und das Führungselement 30 sind jeweils plattenförmig ausgebildet (parallel zu der XZ-Ebene). Die Führung des Schiebeelements 20 erfolgt mit jeweils zwei Nuten im Gehäuse 10 bzw. Führungselement 30 und den entsprechenden Federn am Schiebeelement 20. Das Schiebeelement 20 ist in der XZ-Ebene L-förmig bzw. hakenförmig ausgebildet. Das Schiebeelement 20 weist ferner drei Rillen 25 auf, die senkrecht zu der Führungsrichtung verlaufen. Der Sicherungslasttrennschalter 1 umfasst ferner ein plattenförmiges Kontaktelement 40, das weiter unten ausführlicher beschrieben wird. In Fig. 3 ist das Schiebeelement 20 relativ zu dem Gehäuse 10 in der ersten Position angeordnet und bildet mit dem Kontaktelement 40 einen ersten Aufnahmebereich zur Aufnahme einer ersten Sammelschiene 3a einer ersten Dicke, insbesondere einer Dicke von 10 mm.

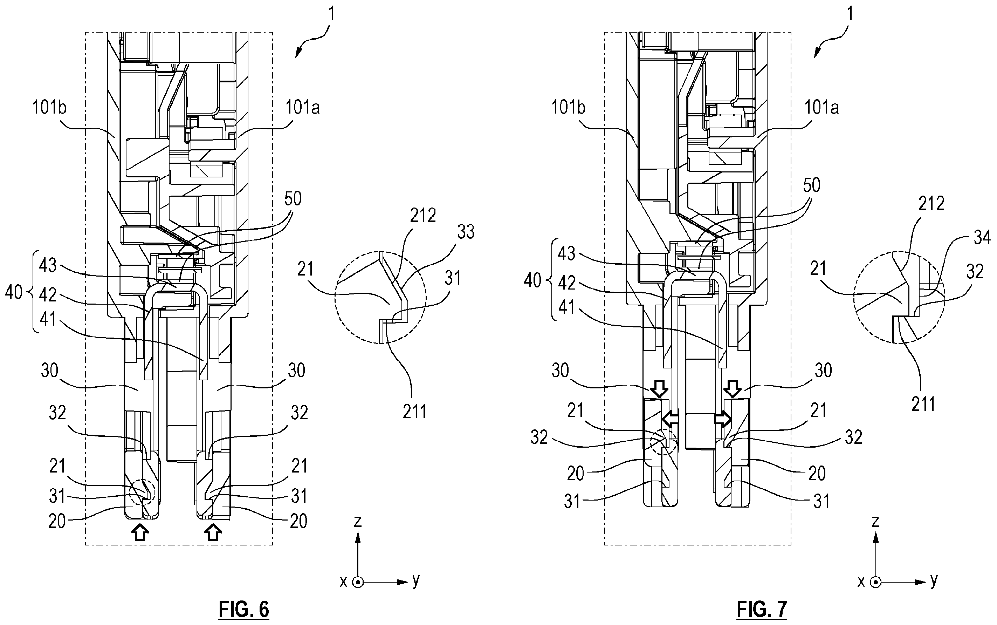

Der Sicherungslasttrennschalter 1 umfasst noch ein weiteres Schiebeelement 20, das in Fig. 3 größtenteils verdeckt ist. Das weitere Schiebeelement 20 ist parallel zu dem Schiebeelement 20 angeordnet ist und von dem Schiebeelement 20 in der Erstreckungsrichtung der Sammelschienen 3 (Y-Richtung) beabstandet. Das Schiebeelement 20 ist an dem Seitenabschnitt 101a des Gehäuses angeordnet und weist in Fig. 3 in die positive y-Richtung. Das weitere Schiebeelement 20 ist an dem gegenüberliegenden Seitenabschnitt 101b des Gehäuses 10 angeordnet und weist in Fig. 3 in die negative y-Richtung. Ferner weist das Gehäuse 10 ein weiteres Führungselement 30 zum Führen des weiteren Schiebeelements 20 entlang der Führungsrichtung auf, wobei das weitere Führungselement 30 parallel zu dem Führungselement 30 angeordnet ist und von dem Führungselement 30 in der Erstreckungsrichtung der Sammelschienen 3 (Y-Richtung) beabstandet ist. Das Kontaktelement 40 weist einen ersten Kontaktabschnitt 41 und einen zweiten Kontaktabschnitt 42 auf, die parallel zueinander angeordnet sind und in der Erstreckungsrichtung der Sammelschienen 3 voneinander beabstandet sind. Der erste Kontaktabschnitt 41 liegt in der Z-Richtung dem Schiebeelement 20 gegenüber, und der zweite Kontaktabschnitt 42 liegt in der Z-Richtung dem weiteren Schiebeelement 20 gegenüber. Der erste Kontaktabschnitt 41 und der zweite Kontaktabschnitt 42 sind außerdem durch einen Verbindungsabschnitt 43 des Kontaktelements 40 miteinander verbunden (siehe Fig. 6 und 7). Das Kontaktelement 40 ist insbesondere U-förmig ausgebildet.

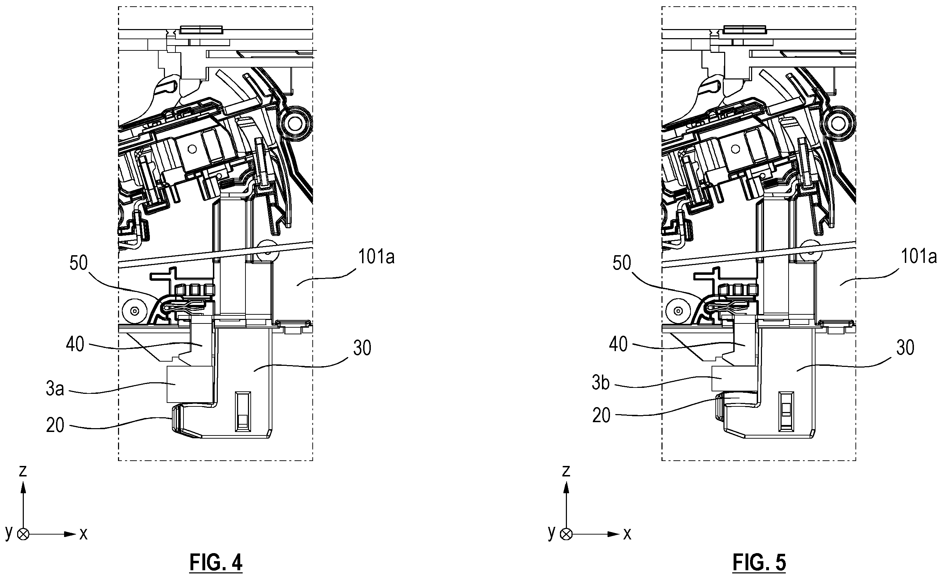

Fig. 4 zeigt eine Schnittansicht des Sicherungslasttrennschalters 1, der eine erste Sammelschiene 3a einer ersten Dicke (10 mm) kontaktiert. Die Schnittansicht zeigt das Schiebeelement 20, das in der ersten Position angeordnet ist (und in Fig. 4 größtenteils durch das Führungselement 30) verdeckt ist, das Kontaktelement 40, das Federelement 50 und eine Hälfte 101a des Gehäuses 10. Das Schiebeelement 20 und das Kontaktelement 40 bilden einen ersten Aufnahmebereich für die erste Sammelschiene 3a. Das Federelement 50 spannt das Kontaktelement 40 in Richtung des Schiebeelements 20 (in die negative Z-Richtung) vor, um die in den ersten Aufnahmebereich eingesetzte erste Sammelschiene 3a einzuklemmen und zu kontaktieren. Das Schiebeelement 20 und das Führungselement 30 sind in dieser Anordnung übereinanderliegend bzw. deckungsgleich angeordnet.

Fig. 5 zeigt eine Schnittansicht des Sicherungslasttrennschalters 1, der eine zweite Sammelschiene 3b einer zweiten Dicke (5 mm) kontaktiert, die kleiner als die erste Dicke ist. Die Schnittansicht zeigt das Schiebeelement 20, das in der zweiten Position angeordnet ist, das Kontaktelement 40, die zweite Sammelschiene 3b, das Federelement 50 und die Hälfte 101a des Gehäuses 10. Das Schiebeelement 20 und das Kontaktelement 40 bilden einen zweiten Aufnahmebereich für die zweite Sammelschiene 3b. Das Federelement 50 spannt das Kontaktelement 40 in Richtung des Schiebeelements 20 vor, um die in den zweiten Aufnahmebereich eingesetzte zweite Sammelschiene 3b zu kontaktieren. Das Schiebeelement 20 und das Führungselement 30 sind in dieser Anordnung in der Führungsrichtung gegeneinander versetzt angeordnet. Insbesondere steht das Schiebeelement 20 gegenüber dem Führungselement 30 in der positiven Z-Richtung vor.

In Fig. 4 und Fig. 5 wird der elektrische Kontakt jeweils durch das Federelement 50 sichergestellt, das den Metallkontakt (Kontaktelement) 40 auf die jeweilige Sammelschiene 3a, 3b drückt. Das Federelement 50 wird beim Montieren auf dem Sammelschienensystem nur um ca. 1 mm gespannt. Da der Abstand zwischen der ersten Position und der zweiten Position in dieser Ausführungsform 5 mm beträgt (entsprechend der Differenz zwischen der ersten Dicke der ersten Sammelschiene, 10 mm, und der zweiten Dicke der zweiten Sammelschiene, 5 mm), beträgt der Abstand zwischen der ersten und der zweiten Position somit das Fünffache des Hubs des Federelements 50.

Fig. 6 zeigt den Sicherungslasttrennschalter 1, bei dem das Schiebeelement 20 in der ersten Position verrastet ist, mit einer Darstellung der aufzubringenden Kraft zur Bewegung des Schiebeelements 20 von der ersten Position zu der zweiten Position, sowie eine Detailansicht einer Rastnase 21 des Schiebeelements 20. Das Führungselement 30 weist eine erste Rastkante 31 und eine zweite Rastkante 32 auf. In Fig. 6 befindet sich das Schiebeelement 20 in der ersten Position und die Rastnase 21 ist an der ersten Rastkante 31 verrastet, um das Schiebeelement 20 in der ersten Position zu verrasten. Das Führungselement 30 weist ferner eine erste Aussparung 33 auf, die durch die erste Rastkante 31 begrenzt wird. Die Rastnase 21 greift in diesem Fall formschlüssig in die erste Aussparung 33 ein. Die Rastnase 21 kann durch eine äußere Kraft, die in der positiven Z-Richtung auf das Schiebeelement 20 wirkt, aus der ersten Aussparung 31 herausdrückt werden, um die Verrastung des Schiebeelements 20 in der ersten Position zu lösen. Diese aufzuwendende Kraft ist in Fig. 6 durch senkrechte Pfeile dargestellt. Somit kann das Schiebeelement von 10 mm Sammelschienen 3a auf 5 mm Sammelschienen 3b verstellt werden. Wie in der Detailansicht zu sehen ist, ist die Rastnase 21 in der negativen Z-Richtung durch eine Anschlagsfläche 211 begrenzt, die senkrecht zu der Z-Richtung verläuft und an der ersten Rastkante 31 anliegt, um eine Bewegung der Rastnase 21 in die negative Z-Richtung zu verhindern. Ferner ist die Rastnase 21 in der positiven Z-Richtung durch eine Abschrägung 212 begrenzt, wobei die Abschrägung 212 mit der Z-Richtung einen Winkel kleiner als 45° einschließt. Für ein Verstellen des Schiebeelements 20 aus der Position für eine 10 mm Sammelschiene zu einer 5 mm Sammelschiene kann das Schiebeelement 10 somit direkt nach oben (in die positive Z-Richtung) geschoben werden. Die angeschrägte Rastnase 21 drückt sich dabei aus der ersten Aussparung 33 aus dem Gehäuse 10 und rastet an der zweiten Rastkante 32 für die 5 mm Sammelschiene wieder ein. In Fig. 6 ist ferner das plattenförmige Kontaktelement 40 mit dem ersten Kontaktabschnitt 41, dem zweiten Kontaktabschnitt 42 und dem Verbindungsabschnitt 43 zu sehen.

Fig. 7 zeigt den Sicherungslasttrennschalter 1, bei dem das Schiebeelement 20 in der zweiten Position verrastet ist, mit einer Darstellung der aufzubringenden Kraft zur Bewegung des Schiebeelements 20 von der zweiten Position zu der ersten Position, sowie eine Detailansicht der Rastnase 21 des Schiebeelements 20. In Fig. 7 befindet sich das Schiebeelement 20 in der zweiten Position und die Rastnase 21 ist an der zweiten Rastkante 32 verrastet, um das Schiebeelement 20 in der zweiten Position zu verrasten. Das Führungselement 30 weist ferner eine zweite Aussparung 34 auf, die durch die zweite Rastkante 32 begrenzt wird. Die Rastnase 21 greift in die zweite Aussparung 34 ein. Wie in der Detailansicht zu sehen ist, liegt die Anschlagsfläche 211 an der zweiten Rastkante 32 an, um eine Bewegung der Rastnase 21 in die negative Z-Richtung zu verhindern. Die Rastnase 21 kann durch eine äußere Kraft, die senkrecht zu der Führungsrichtung und senkrecht zu der zweiten Rastkante 32 (d. h. parallel zu der Y-Richtung) auf den Abschnitt des Schiebeelements 20 wirkt, der in der Z-Richtung gegenüber dem Führungselement 30 vorsteht (siehe auch Fig. 5), in der Y-Richtung über die zweite Rastkante 32 hinaus gedrückt bzw. gegen die zweite Rastkante 32 versetzt werden, um die Rastnase 21 aus der zweiten Aussparung 34 herauszubewegen. Diese aufzuwendende Kraft wird durch den horizontalen Doppelpfeil dargestellt. Anschließend kann das Schiebeelemente 20 durch eine zweite äußere Kraft in Richtung der ersten Position (in die negative Z-Richtung) bewegt werden, wie durch die senkrechten Pfeile dargestellt, und somit die Verrastung des Schiebeelements 20 in der zweiten Position gelöst werden. Wenn keine äußere Kraft mehr in der Y-Richtung auf das Schiebeelement 20 wirkt, kann die Rastnase 21 dann in die erste Aussparung 31 einrasten. Mit anderen Worten wird bei einer Umstellung des Geräts für ein Sammelschienensystem mit einer Dicke von 10 mm, wie bei der Umstellung auf ein 5 mm Sammelschienensystem, wieder jedes Schiebeelement 10 am Gerät 1 verstellt. Hierfür wird die Unterseite der Rastnase 21 des Schiebeelements 10 über die Verriegelung 32 gedrückt. Dies wird realisiert, indem der Anwender die Schiebeelemente 20 nach außen und unten drückt.

### Liste der Bezugszeichen

- 1: Sicherungslasttrennschalter
- 3: Sammelschiene
- 3a: erste Sammelschiene
- 3b: zweite Sammelschiene
- 10: Gehäuse
- 20: Schiebeelement, Schieber
- 21: Rastnase
- 30: Führungselement
- 31: erste Rastkante
- 32: zweite Rastkante
- 33: erste Aussparung
- 34: zweite Aussparung
- 40: Kontaktelement
- 41: erster Kontaktabschnitt
- 42: zweiter Kontaktabschnitt
- 43: Verbindungsabschnitt
- 50: Federelement
- 101a, 101b: Seitenabschnitt, Gehäusehälfte
- 211: Anschlagsfläche
- 212: Abschrägung

## Patentansprüche

1. Sicherungslasttrennschalter (1) für Sammelschienen (3) unterschiedlicher Dicken, wobei der Sicherungslasttrennschalter (1) umfasst:
ein Gehäuse (10);
ein Schiebeelement (20), das relativ zu dem Gehäuse (10) zwischen einer ersten Position und einer zweiten Position hin und her bewegbar angeordnet ist;
ein Kontaktelement (40), das relativ zu dem Gehäuse (10) bewegbar angeordnet ist; und
ein Federelement (50);
wobei das Schiebeelement (20) und das Kontaktelement (40) so ausgebildet sind, dass sie einen ersten Aufnahmebereich für eine erste Sammelschiene (3a) einer ersten Dicke definieren, wenn das Schiebeelement (20) in der ersten Position angeordnet ist, und einen zweiten Aufnahmebereich für eine zweite Sammelschiene (3b) einer zweiten Dicke, die kleiner als die erste Dicke ist, definieren, wenn das Schiebeelement (20) in der zweiten Position angeordnet ist; und
wobei das Federelement (50) so ausgebildet ist, dass es das Kontaktelement (40) in Richtung des Schiebeelements (20) vorspannt, um eine in den ersten Aufnahmebereich eingesetzte erste Sammelschiene (3a) zu kontaktieren und um eine in den zweiten Aufnahmebereich eingesetzte zweite Sammelschiene (3b) zu kontaktieren,
**dadurch gekennzeichnet, dass** das Schiebeelement (20) in der ersten Position und in der zweiten Position jeweils verrastbar ist.

2. Sicherungslasttrennschalter (1) nach Anspruch 1, wobei das Gehäuse (10) ein Führungselement (30) zum Führen des Schiebeelements (20) entlang einer Führungsrichtung zwischen der ersten und der zweiten Position umfasst.

3. Sicherungslasttrennschalter (1) nach Anspruch 2, wobei das Führungselement (30) eine erste Rastkante (31) und eine zweite Rastkante (32) aufweist; und
wobei das Schiebeelement (20) eine Rastnase (21) umfasst, die zum Verrasten an der ersten Rastkante (31) konfiguriert ist, um das Schiebeelement (20) in der ersten Position zu verrasten, und die zum Verrasten an der zweiten Rastkante (32) konfiguriert ist, um das Schiebeelement (20) in der zweiten Position zu verrasten.

4. Sicherungslasttrennschalter (1) nach Anspruch 2 oder 3, wobei das Führungselement (30) eine erste Aussparung (33) aufweist, die durch die erste Rastkante (31) begrenzt wird, so dass, wenn die Rastnase (21) an der ersten Rastkante (31) verrastet, die Rastnase (21) in die erste Aussparung (33) eingreift.

5. Sicherungslasttrennschalter (1) nach Anspruch 4, wobei die Rastnase (21) und die erste Aussparung (33) so ausgebildet sind, dass, wenn das Schiebeelement (20) in der ersten Position verrastet ist, die Rastnase (21) durch eine äußere Kraft, die in Richtung von der ersten Position zu der zweiten Position auf das Schiebeelement (20) wirkt, aus der ersten Aussparung (33) herausdrückt werden kann, um die Verrastung des Schiebeelements (20) in der ersten Position zu lösen.

6. Sicherungslasttrennschalter (1) nach Anspruch 5, der ferner so konfiguriert ist, dass, wenn das Schiebeelement (20) in der zweiten Position verrastet ist, die Rastnase (21) durch eine erste äußere Kraft, die senkrecht zu der Führungsrichtung und senkrecht zu der zweiten Rastkante (32) auf einen Abschnitt des Schiebeelements (20) wirkt, der in der Führungsrichtung gegenüber dem Führungselement (30) vorsteht, in Richtung der ersten äußeren Kraft über die zweite Rastkante (32) hinaus gedrückt werden kann und anschließend das Schiebeelement (20) durch eine zweite äußere Kraft, die in Richtung von der zweiten Position zu der ersten Position auf das Schiebeelement (20) wirkt, aus der Verrastung in der zweiten Position gelöst und in Richtung der ersten Position bewegt werden kann.

7. Sicherungslasttrennschalter (1) nach einem der vorstehenden Ansprüche, wobei das Schiebeelement (20) plattenförmig ausgebildet ist.

8. Sicherungslasttrennschalter (1) nach einem der vorstehenden Ansprüche 2-6 wobei, wenn das Schiebeelement (20) in der ersten Position angeordnet ist, das Schiebeelement (20) und das Führungelement (30) übereinanderliegend angeordnet sind; und wenn das Schiebeelement (20) in der zweiten Position angeordnet ist, das Schiebeelement (20) und das Führungselement (30) in der Führungsrichtung gegeneinander versetzt angeordnet sind.

9. Sicherungslasttrennschalter (1) nach einem der vorstehenden Ansprüche, wobei das Schiebeelement (20) eine Oberfläche mit ein oder mehreren Rillen (201) und/oder Nuten aufweist, die senkrecht zu der Führungsrichtung verlaufen.

10. Sicherungslasttrennschalter (1) nach einem der vorstehenden Ansprüche, wobei ein Abstand zwischen der ersten und der zweiten Position des Schiebeelements (20) größer als ein Hub des Federelements (50) ist, wobei vorzugsweise der Abstand zwischen der ersten und der zweiten Position mindestens das Doppelte, mindestens das Dreifache oder mindestens das Fünffache des Hubs beträgt.

11. Sicherungslasttrennschalter (1) nach einem der vorstehenden Ansprüche, wobei der Sicherungslasttrennschalter (1) ein weiteres Schiebeelement (20) umfasst, das parallel zu dem Schiebeelement (20) angeordnet ist und von dem Schiebeelement (20) in einer Erstreckungsrichtung der Sammelschienen (3) beabstandet ist.

12. Sicherungslasttrennschalter (1) nach Anspruch 11 und einem der Ansprüche 2-6 und 8, wobei das Gehäuse (10) ein weiteres Führungselement (30) zum Führen des weiteren Schiebeelements (20) entlang der Führungsrichtung umfasst, wobei das weitere Führungselement (30) parallel zu dem Führungselement (30) angeordnet ist und von dem Führungselement (30) in der Erstreckungsrichtung der Sammelschienen (3) beabstandet ist.

13. Sicherungslasttrennschalter (1) nach Anspruch 11 oder 12, wobei das Schiebeelement (20) und das weitere Schiebeelement (20) an gegenüberliegenden Seitenabschnitten (101a, 101b) des Gehäuses (10) angeordnet sind.

14. Sicherungslasttrennschalter (1) nach einem der vorstehenden Ansprüche, wobei das Kontaktelement (40) plattenförmig ausgebildet ist.

15. Sicherungslasttrennschalter (1) nach Anspruch 14, wobei das Kontaktelement (40) einen ersten Kontaktabschnitt (41) und einen zweiten Kontaktabschnitt (42), die parallel zueinander angeordnet sind und in der Erstreckungsrichtung der Sammelschienen (3) voneinander beabstandet sind, und einen Verbindungsabschnitt (43) zum Verbinden des ersten Kontaktabschnitts (41) mit dem zweiten Kontaktabschnitt (42) umfasst.

## Claims

1. A fuse load break switch (1) for busbars (3) of different thicknesses, wherein the fuse load break switch (1) comprises:
a housing (10);
a sliding element (20), which is arranged movably back and forth relative to the housing (10) between a first position and a second position;
a contact element (40), which is arranged movably relative to the housing (10);
and
a spring element (50);
wherein the sliding element (20) and the contact element (40) are designed such that they define a first receiving region for a first busbar (3a) of a first thickness when the sliding element (20) is in the first position, and a second receiving region for a second busbar (3b) of a second thickness, which is smaller than the first thickness, when the sliding element (20) is in the second position; and
wherein the spring element (50) is designed such that it preloads the contact element (40) towards the sliding element (20) in order to contact a first busbar (3a) that is inserted into the first receiving region and to contact a second busbar (3b) that is inserted into the second receiving region,
**characterised in that** the sliding element (20) can be locked in the first position and in the second position.

2. The fuse load break switch (1) according to Claim 1, wherein the housing (10) comprises a guide element (30) for guiding the sliding element (20) along a guiding direction between the first and the second position.

3. The fuse load break switch (1) according to Claim 2, wherein the guide element (30) has a first locking edge (31) and a second locking edge (32); and
wherein the sliding element (20) comprises a locking nose (21), which is configured to lock on the first locking edge (31) in order to lock the sliding element (20) in the first position and which is configured to lock on the second locking edge (32) in order to lock the sliding element (20) in the second position.

4. The fuse load break switch (1) according to Claim 2 or 3, wherein the guide element (30) has a first cutout (33), which is delimited by the first locking edge (31) such that, when the locking nose (21) locks on the first locking edge (31), the locking nose (21) engages in the first cutout (33).

5. The fuse load break switch (1) according to Claim 4, wherein the locking nose (21) and the first cutout (33) are designed such that, when the sliding element (20) is locked in the first position, the locking nose (21) can be pushed out of the first cutout (33) by an external force acting on the sliding element (20) in the direction from the first position to the second position, in order to release the locking of the sliding element (20) in the first position.

6. The fuse load break switch (1) according to Claim 5, which is also configured such that, when the sliding element (20) is locked in the second position, the locking nose (21) can be pushed beyond the second locking edge (32) by a first external force acting perpendicular to the guiding direction and perpendicular to the second locking edge (32) on a portion of the sliding element (20) that protrudes in the guiding direction relative to the guide element (30), in the direction of the first external force, and then the sliding element (20) can be released from the locking in the second position and can be moved towards the first position by a second external force acting in the direction from the second position to the first position on the sliding element (20).

7. The fuse load break switch (1) according to one of the preceding claims, wherein the sliding element (20) is planar.

8. The fuse load break switch (1) according to one of the preceding Claims 2-6, wherein, when the sliding element (20) is in the first position, the sliding element (20) and the guide element (30) are arranged lying one on top of the other; and when the sliding element (20) is in the second position, the sliding element (20) and the guide element (30) are offset from one another in the guiding direction.

9. The fuse load break switch (1) according to one of the preceding claims, wherein the sliding element (20) has a surface with one or more channels (201) and/or grooves, which run perpendicular to the guiding direction.

10. The fuse load break switch (1) according to one of the preceding claims, wherein a distance between the first and the second position of the sliding element (20) is greater than a travel of the spring element (50), wherein preferably the distance between the first and the second position is at least twice, at least three times, or at least five times the travel.

11. The fuse load break switch (1) according to one of the preceding claims, wherein the fuse load break switch (1) comprises a further sliding element (20), which is arranged parallel to the sliding element (20) and spaced from the sliding element (20) in an extension direction of the busbars (3).

12. The fuse load break switch (1) according to Claim 11 and one of Claims 2-6 and 8, wherein the housing (10) comprises a further guide element (30) for guiding the further sliding element (20) along the guiding direction, wherein the further guide element (30) is arranged parallel to the guide element (30) and is spaced from the guide element (30) in the extension direction of the busbars (3).

13. The fuse load break switch (1) according to Claim 11 or 12, wherein the sliding element (20) and the further sliding element (20) are arranged on opposing side portions (101a, 101b) of the housing (10).

14. The fuse load break switch (1) according to one of the preceding claims, wherein the contact element (40) is planar.

15. The fuse load break switch (1) according to Claim 14, wherein the contact element (40) comprises a first contact portion (41) and a second contact portion (42), which are arranged parallel to one another and are spaced from one another in the extension direction of the busbars (3), and a connection portion (43) for connecting the first contact portion (41) to the second contact portion (42).

## Revendications

1. Sectionneur de charge à fusible (1) pour barres omnibus (3) de différentes épaisseurs, où le sectionneur de charge à fusible (1) comprend :
un boîtier (10) ;
un élément coulissant (20), qui est disposé de manière à pouvoir être déplacé d'avant en arrière par rapport au boîtier (10) entre une première position et une seconde position ;
un élément de contact (40), qui est disposé de manière à pouvoir être déplacé par rapport au boîtier (10) ;
et
un élément ressort (50) ;
où l'élément coulissant (20) et l'élément de contact (40) sont formés de sorte qu'ils définissent une première zone de réception pour une première barre omnibus (3a) d'une première épaisseur lorsque l'élément coulissant (20) est disposé dans la première position, et qu'ils définissent une seconde zone de réception pour une seconde barre omnibus (3b) d'une seconde épaisseur, qui est inférieure à la première épaisseur, lorsque l'élément coulissant (20) est disposé dans la seconde position ; et
où l'élément ressort (50) est formé de sorte qu'il précontraint l'élément de contact (40) en direction de l'élément coulissant (20), afin de mettre en contact une première barre omnibus (3a) insérée dans la première zone de réception et afin de mettre en contact une seconde barre omnibus (3b) insérée dans la seconde zone de réception,
**caractérisé en ce que** l'élément coulissant (20) est encliquetable respectivement dans la première position et dans la seconde position.

2. Sectionneur de charge à fusible (1) selon la revendication 1, où le boîtier (10) comprend un élément de guidage (30) pour guider l'élément coulissant (20) le long d'une direction de guidage entre la première et la seconde position.

3. Sectionneur de charge à fusible (1) selon la revendication 2, où l'élément de guidage (30) présente un premier bord d'encliquetage (31) et un second bord d'encliquetage (32) ; et
où l'élément coulissant (20) comprend un ergot d'encliquetage (21), qui est configuré pour encliqueter sur le premier bord d'encliquetage (31) afin d'encliqueter l'élément coulissant (20) dans la première position, et qui est configuré pour encliqueter sur le second bord d'encliquetage (32) afin d'encliqueter l'élément coulissant (20) dans la seconde position.

4. Sectionneur de charge à fusible (1) selon la revendication 2 ou 3, où l'élément de guidage (30) présente un premier évidement (33), qui est délimité par le premier bord d'encliquetage (31), de sorte que, lorsque l'ergot d'encliquetage (21) est encliqueté sur le premier bord d'encliquetage (31), l'ergot d'encliquetage (21) s'engage dans le premier évidement (33).

5. Sectionneur de charge à fusible (1) selon la revendication 4, où l'ergot d'encliquetage (21) et le premier évidement (33) sont formés de sorte que, lorsque l'élément coulissant (20) est encliqueté dans la première position, l'ergot d'encliquetage (21) peut être expulsé du premier évidement (33) par une force extérieure agissant en direction de la première position vers la seconde position sur l'élément coulissant (20), afin de libérer l'encliquetage de l'élément coulissant (20) dans la première position.

6. Sectionneur de charge à fusible (1) selon la revendication 5, qui est en outre configuré de sorte que, lorsque l'élément coulissant (20) est encliqueté dans la seconde position, l'ergot d'encliquetage (21) peut être expulsé au-delà du second bord d'encliquetage (32) par une première force extérieure agissant perpendiculairement à la direction de guidage et perpendiculairement au second bord d'encliquetage (32) sur une section de l'élément coulissant (20) qui dépasse par rapport à l'élément de guidage (30) dans la direction de guidage, et ensuite l'élément coulissant (20) peut être libéré de l'encliquetage dans la seconde position et déplacé en direction de la première position par une seconde force extérieure agissant en direction de la seconde position vers la première position sur l'élément coulissant (20).

7. Sectionneur de charge à fusible (1) selon l'une des revendications précédentes, où l'élément coulissant (20) est formé en forme de plaque.

8. Sectionneur de charge à fusible (1) selon l'une des revendications précédentes 2-6,
où, lorsque l'élément coulissant (20) est disposé dans la première position, l'élément coulissant (20) et l'élément de guidage (30) sont disposés l'un sur l'autre ; et lorsque l'élément coulissant (20) est disposé dans la seconde position, l'élément coulissant (20) et l'élément de guidage (30) sont disposés décalés l'un par rapport à l'autre dans la direction de guidage.

9. Sectionneur de charge à fusible (1) selon l'une des revendications précédentes, où l'élément coulissant (20) présente une surface avec une ou plusieurs rainures (201) et/ou cannelures, qui s'étendent perpendiculairement à la direction de guidage.

10. Sectionneur de charge à fusible (1) selon l'une des revendications précédentes, où une distance entre la première et la seconde position de l'élément coulissant (20) est supérieure à une course de l'élément ressort (50), où de préférence la distance entre la première et la seconde position est au moins le double, au moins le triple ou au moins le quintuple de la course.

11. Sectionneur de charge à fusible (1) selon l'une des revendications précédentes,
où le sectionneur de charge à fusible (1) comprend un autre élément coulissant (20), qui est disposé parallèle à l'élément coulissant (20) et espacé de l'élément coulissant (20) dans une direction d'extension des barres omnibus (3).

12. Sectionneur de charge à fusible (1) selon la revendication 11 et l'une des revendications 2-6 et 8,
où le boîtier (10) comprend un autre élément de guidage (30) pour guider l'autre élément coulissant (20) le long de la direction de guidage, où l'autre élément de guidage (30) est disposé parallèle à l'élément de guidage (30) et espacé de l'élément de guidage (30) dans la direction d'extension des barres omnibus (3).

13. Sectionneur de charge à fusible (1) selon la revendication 11 ou 12, où l'élément coulissant (20) et l'autre élément coulissant (20) sont disposés sur des sections latérales opposées (101a, 101b) du boîtier (10).

14. Sectionneur de charge à fusible (1) selon l'une des revendications précédentes, où l'élément de contact (40) est formé en forme de plaque.

15. Sectionneur de charge à fusible (1) selon la revendication 14, où l'élément de contact (40) comprend une première section de contact (41) et une seconde section de contact (42), qui sont disposées parallèles l'une par rapport à l'autre et espacées l'un de l'autre dans la direction d'extension des barres omnibus (3), et une section de liaison (43) pour relier la première section de contact (41) à la seconde section de contact (42).
